# EUROPÄISCHE PATENTSCHRIFT

(11) **EP 3 504 935 B1**
(45) Veröffentlichungstag und Bekanntmachung des Hinweises auf die Patenterteilung: **11.03.2020**
(21) Anmeldenummer: 17800698.7
(22) Anmeldetag: 13.10.2017
(51) Int. Cl.: H05B 3/00, H05B 3/84

(54) **VERFAHREN UND VORRICHTUNG ZUM VERLEGEN VON SAMMELLEISTEN IN FOLIEN**
METHOD AND DEVICE FOR ARRANGING BUSBARS ON A SHEET
MÉTHODE ET DISPOSITIF POUR PLACER UN RAIL COLLECTEUR DE COURANT SUR UN FILM

(30) Priorität: 14.10.2016 DE 102016119678
(43) Veröffentlichungstag der Anmeldung: 03.07.2019
(73) Patentinhaber: Hotlineglass GmbH, 52066 Aachen (DE)
(72) Erfinder: BÄUMLER, Peter, 52066 Aachen (DE); BÄUMLER, Stephan, 52066 Aachen (DE); WICKA, Sebastian, 52066 Aachen (DE)
(74) Vertreter: Naeven, Ralf
(86) Internationale Anmeldenummer: PCT/DE2017/100875
(87) Internationale Veröffentlichungsnummer: WO 2018/068794

(56) Entgegenhaltungen:
- WO-A1-2006/010346
- WO-A2-2004/077496
- DE-A1- 2 127 693
- US-A1- 2007 281 049

## Beschreibung

Die Erfindung betrifft ein Verfahren zum Verlegen von Sammelleisten in Folien gemäß dem Oberbegriff des Anspruchs 1 sowie eine Vorrichtung zum Verlegen von Sammelleisten in Folien gemäß dem Oberbegriff des Anspruchs 9.

Beheizbare Glasscheiben weisen in der Regel über elektrischen Widerstand erhitzbare Heizdrähte auf, die zwischen Folien eingelegt und die über Sammelleisten elektrisch kontaktiert sind. Die Heizdrähte kontaktieren üblicherweise über eine Lötverbindung die Sammelleisten, wobei die Drahtenden in einer Sandwich-Struktur zwischen einer oberen und einer unteren Sammelleiste eines Sammelleistenpaares angeordnet sind. Außerdem weisen die Sammelleistenpaare Stromanschlüsse für die Stromzufuhr auf. In der fertigen Glasscheibe sind die Folien mit den Heizdrähten und Sammelleisten zwischen zwei Teilscheiben einlaminiert. Derartige beheizbare Glasscheiben finden insbesondere Anwendung bei Kraftfahrzeugen. Insbesondere die Anwendung im KFZ-Bereich, z.B. für Windschutzscheiben, hat zur Folge, dass die Sammelschienen überwiegend gekrümmt verlaufen, z.B. entlang der oberen und/oder unteren Längskante der Glasscheibe.

Aus der DE 69607563 T2 sind eine Vorrichtung und ein Verfahren bekannt, automatisiert Folien mit Heizdrähten zu belegen. Hierfür werden mehrere Folien auf eine Wickeltrommel aufgelegt und die Heizdrähte werden mittels einer Heizdraht-Ablegevorrichtung auf die Folien aufgedrückt. Die Art und Weise des Aufbringens der Sammelleisten ist in der vorgenannten Druckschrift nicht dargestellt. Das Verlegen der Sammelleiste erfolgt oftmals manuell.

Die untere Sammelleiste muss vor dem Aufbringen der Heizdrähte angebracht werden. Nachdem die Drähte aufgebracht sind, wird die obere Sammelleiste aufgebracht und mit den Heizdrähten und der unteren Sammelleiste verlötet. Es ist allgemein bekannt, an einer Wickeltrommel parallel zur Wickelachse eine Sammelschienenlötvorrichtung mit angetriebenen Längs- und Querachsen und Drehantrieb vertikal über einer als Löt-Rolle dienenden Andrückrolle vorzusehen, so dass der Lötprozess halbautomatisch erfolgen kann.

Das manuelle Verlegen der Sammelleisten und ein halbautomatisches Verlöten sind zeitaufwändig. Insbesondere ein häufig erforderliches manuelles Handling zur genauen Platzierung der Startpunkte oder Endpunkte der Sammelschienen sowie die manuelle Entfernung von bisher unvermeidlichen Reststücken sind nachteilig.

Vom italienischen Unternehmen Easy Automation, Rom, (www.easyautomation.it) sind ein Verfahren und eine Vorrichtung bekannt, die ein automatisches Verlegen von Sammelleisten erlauben. Folienartige Sammelleisten werden von einem Vorrat einer Andrückrolle zugeführt. Die auf der Folie abgelegte Sammelleiste wird dann abgeschnitten, wobei naturgemäß ein Stück Sammelleiste hinter der Andrückstelle der Andrückrolle verbleibt. Somit ist es erforderlich beim Verlegen der nächsten Sammelleiste das verbliebene Stück abzuschneiden.

Die DE 21 27 693 A1 offenbart ein Verfahren und eine Vorrichtung der eingangs genannten Art, wonach zur Herstellung von Verbundglasscheiben zunächst Sammelleisten mittels einer elektrisch beheizbaren Führungs- und Andrückvorrichtungen auf eine thermoplastische Basisfolie aufgelegt werden. Hiernach werden von Spulen ablaufende Heizdrähte auf die Basisfolie und die Sammelleisten angebracht und an diesen wiederum mittels Andrückvorrichtungen fixiert. Die Art und Weise der Zuführung der Sammelleisten werden nicht näher dargestellt.

Das Ablegen von Heizdrähten zusammen mit Sammelleisten auf thermoplastischen Folien, insbesondere zur Herstellung von beheizbaren Scheiben, ist in diversen weiteren Dokumenten zum Stand der Technik offenbart, z.B. in der US 2007/0281049, der WO 2006/010346 A1 oder der WO 2004/077496 A2. Keine dieser Dokumente stellt die Art und Weise der Zuführung der Sammelleisten näher dar.

Der Erfindung liegt die Aufgabe zugrunde, ein Verfahren und eine Vorrichtung der eingangs genannten Art zur Verfügung zu stellen, die insbesondere für eine Massenproduktion solcher Folien für Glasscheiben solcher Folien eine verbesserte Automatisierbarkeit und somit eine Optimierung der bekannten Verfahren mit sich bringen.

Die Aufgabe wird hinsichtlich des Verfahrens mit den kennzeichnenden Merkmalen des Anspruchs 1 und hinsichtlich der Vorrichtung mit den kennzeichnenden Merkmalen des Anspruchs 9 gelöst. Vorteilhafte Ausführungsformen ergeben sich aus den Unteransprüchen.

Beispielhafte Ausführungsformen des erfindungsgemäßen Verfahrens sowie der erfindungsgemäßen Vorrichtung sind im Folgenden anhand von Figuren erläutert.

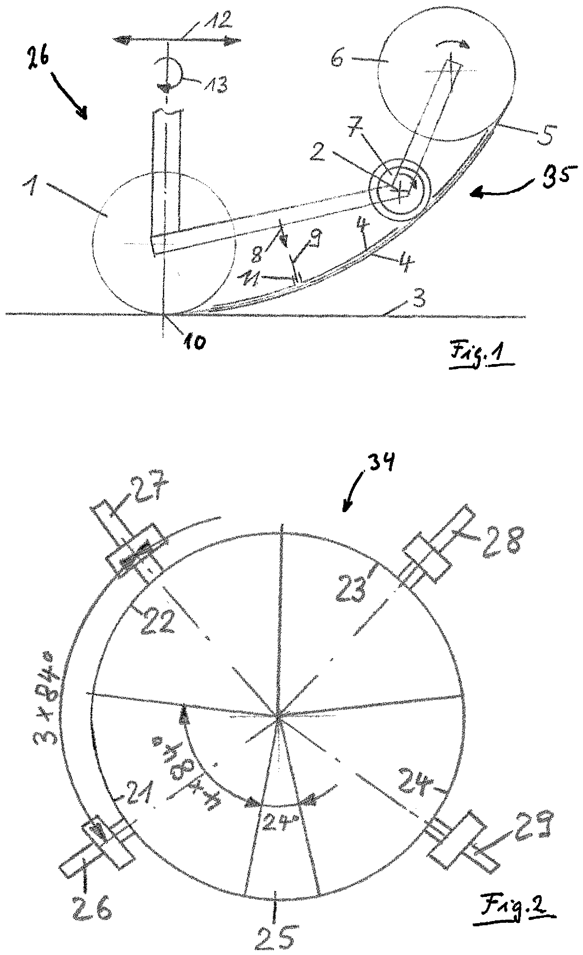

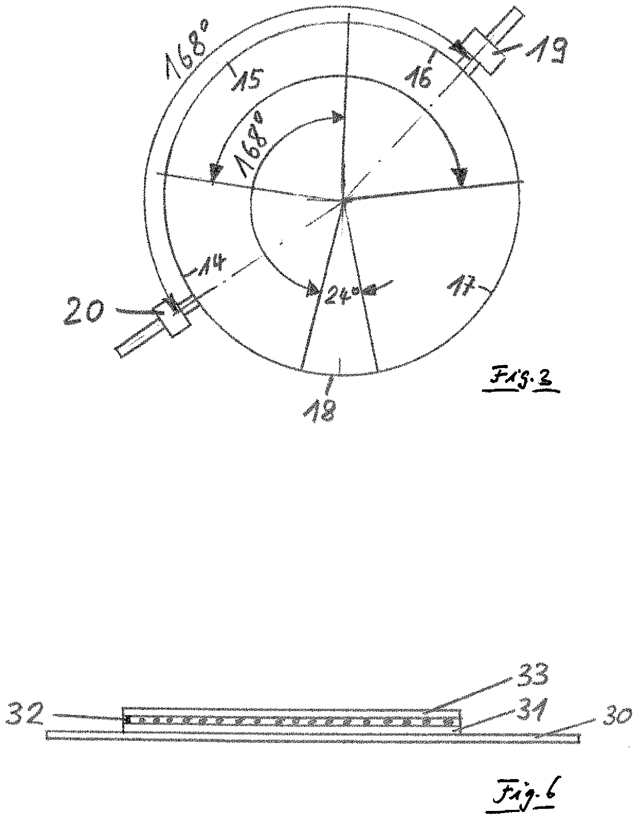

Fig. 1 zeigt eine Sammelleisten-Ablegeeinheit 26 mit einer Andrückrolle 1, mittels der eine Sammelleiste 5 in Richtung auf eine Basisfolie 3, z.B. aus Polyvinylbutylen (PVB), gepresst wird. Die Basisfolie 3 liegt auf einer hier nicht dargestellten Folienunterlage auf, z.B. einem hier nicht dargestellten flachen Tisch oder aber bevorzugt auf einer Wickeltrommel 34 (siehe Fig. 2 und 3). Die Sammelleisten-Ablegeeinheit 26 kann an der Folienauflage gelagert sein. Ist die Folienauflage eine Wickeltrommel 34 (Fig. 2 und 3), ist es möglich, eine Lagerung derart vorzusehen, dass der Umfang der Wickeltrommel 34 um ihre Rotationsachse relativ zur Sammelleisten-Ablegeeinheit 26 rotiert werden kann.

Eine Sammelleiste 5 kann z.B. eine verzinnte Kupferschiene sein mit einer Breite von vorzugsweise 5 mm bis 10 mm und einer Dicke von z.B. 0,04 mm bis 0,2 mm. Ist noch kein Heizdraht verlegt, wird die Sammelleiste 5 direkt auf die Basisfolie 3 gelegt und z.B. mit ihr verklebt. Für den Klebevorgang kann die Andrückrolle 1 beheizt sein und dient somit als Kleberolle. Liegt bereits eine untere Sammelleiste 31 (siehe Fig. 6) auf der Basisfolie 30 bzw. 3 und sind Heizdrähte 32 (siehe Fig. 6) verlegt, dient die dann zu verlegende Sammelleiste 5 als obere Sammelleiste 33 (siehe Fig. 6) eines Sammelleistenpaares und wird mit den Heizdrähten 32 und der unteren Sammelleiste 31 verlötet. Die mit Heizdrähten 32 und Sammelleisten 31 und 33 belegte Basisfolie 3 oder 30 kann dann zur Bildung eines Folienlaminats mit einer weiteren Folie abgedeckt werden.

Das Verlöten kann mittels gesonderter hier nicht dargestellter Löteinrichtungen erfolgen. Vorteilhaft ist es jedoch, auch das Verlöten vorzugsweise beim Verlegen der oberen Sammelleiste 33 mittels der Andrückrolle 1 zu bewirken. Hierfür kann die Temperatur der Andrückrolle entsprechend hoch eingestellt und/oder die Verfahrgeschwindigkeit angepasst werden. Das Aufheizen auf die in der Regel höhere Löt-Temperatur kann z.B. während des Ablegens der Heizdrähte 32 erfolgen. Das Lötmaterial kann bereits auf der Sammelleiste, z.B. als Schichtmaterial, aufgebracht sein oder gesondert zugeführt werden. Somit kann die Andrückrolle 1 sowohl als reine Andrückrolle, als Kleberolle als auch als Löt-Rolle dienen. Es ist aber auch möglich, eine Sammelleisten-Ablegeeinheit mit zwei Andrückrollen 1 vorzusehen, von denen eine als Kleberolle und die andere als Löt-Rolle fungieren kann.

Alternativ kann auch vorgesehen werden, dass eine in den Figuren nicht dargestellte Sammelleisten-Doppelablegeeinheit vorgesehen wird, bei der zumindest ein Führungskanal 4 (siehe nähere Erläuterung weiter unten) und die Andrückrolle 1 in mindestens zweifacher Ausführung dicht nebeneinander an einem gemeinsamen Rotationsantrieb vertikal über der Andrückstelle 10 installiert sind. Die beiden einzelnen Teilvorrichtungen dieser Sammelleisten-Doppelablegeeinheit können derart zum Einsatz kommen, dass eine der Sammelleisten-Ablegeteileinheiten als Ablegevorrichtung zum Ankleben der unteren Sammelleiste 31 mit einer zum Ankleben an die Basisfolie 3 geeigneten Klebetemperatur arbeitet und die andere Sammelleisten-Ablegeteileinheit als Lötvorrichtung mit z. B. höherer Temperatur zum Verlöten der oberen Sammelleiste 33 mit den Heizdrähten 32 und der unteren Sammelleiste 33 (Fig. 6).

Weiter alternativ können für das Verlegen der unteren Sammelleiste 31 (Fig. 6) und der oberen Sammelleiste 33 (Fig. 6) unterschiedliche Sammelleisten-Ablegeeinheiten 26 vorgesehen werden, d.h., dass für die untere Sammelleiste 31 und die obere Sammelleiste 33 zwei vollständige und separate Sammelleisten-Ablegeeinheiten 26 vorgesehen werden, die mittels separat beweglicher und separat ansteuerbarer Führungseinheiten, z.B. Schlitten, bewegt werden können, vorzugsweise beide auf der gleichen Führungsbahn. Dabei haben vorzugsweise beide Sammelleisten-Ablegeeinheiten 26 einander gegenüberliegende Ausgangspositionen, z.B. die Sammelleisten-Ablegeeinheiten 26 für die untere Sammelleiste 31 auf einer Antriebsseite der Wickeltrommel 34 und die Sammelleisten-Ablegeeinheiten 26 für die obere Sammelleiste 33 auf der der Antriebsseite gegenüberliegenden Seite der Wickeltrommel 34.

Die zu verlegende Sammelleiste 5 wird über eine vorzugsweise an die Maße der Sammelleiste 5 angepasste und den Führungskanal 4 aufweisende Führungseinrichtung 35 von einer Vorratsrolle 6 der Andrückrolle 1 zugeführt, wobei der Vorschub der Sammelleiste 5 über eine angetriebene Vorschubrolle 7 einer Vorschubeinrichtung 2 bewirkt wird. Der Führungskanal 4, der beispielsweise ein Länge von 50-200 mm aufweisen kann und vorzugsweise möglichst nahe an einer Andrückstelle 10 unterhalb der Andrückrolle 1 endet, kann oben offen oder vorzugsweise zumindest über eine Teilstrecke im Querschnittsumfang geschlossen sein, soweit nicht die Vorschubrolle 7 oder ein sonstiges Instrument auf die Sammelleiste 5 einwirken sollen. Die Sammelleiste 5 kann über eine der Vorschubrolle 7 gegenüberliegende Wandung des Führungskanals 4 gleiten. Es kann alternativ eine hier nicht dargestellte, vorzugsweise lose gelagerte, Gegendruckrolle vorgesehen sein, gegen die die Vorschubrolle 7 die Sammelleiste 5 drückt. Hierfür kann eine den Zugriff der Gegenrolle auf die Sammelleiste 5 erlaubende Lücke im Führungskanal 4 vorgesehen sein.

Die Vorschubrolle 7 und - sofern vorhanden - optional auch die Gegenrolle kann gummiert oder mit mindestens einem äußeren Gummiring (hier nicht dargestellt) versehen sein.

Der Führungskanal 4 kann zur Anpassung an unterschiedliche Breiten der zu verlegenden Sammelleiste 5 in seiner Breite veränderbar sein und hierzu z.B. aus zwei hier nicht dargestellten, gegeneinander verschiebbaren Führungskanalteilen bestehen. Zudem kann der Führungskanal 4 - anders als in Fig. 1 dargestellt - zumindest streckenweise auch einen in seiner Längserstreckung ungekrümmten, d.h. geradlinigen Verlauf aufweisen.

An einer in Fig. 1 nur symbolisch durch einen Pfeil dargestellten Schneidevorrichtung 8 befindet sich ein Schneidmesser 9, welches durch einen Schneideschlitz 11 im Führungskanal 4 trennend, z.B. durch eine Linearbewegung oder eine Schwenkbewegung, auf die Sammelleiste 5 einwirken kann. Die Art und Weise des Vorschubs der Sammelleiste 5 oder des Aufbaus der Schneidevorrichtung 2 können auch auf andere technische Weise gelöst werden, z.B. mittels eines Lasers anstelle des Schneidmessers 9. Insbesondere die Anordnung der Vorschubeinrichtung 2 oder der Schneidevorrichtung 8 relativ zum Führungskanal 4 kann anders gewählt werden, z.B. die Schneidevorrichtung 8 unterhalb des Führungskanals 4.

Wesentlich ist jedoch die Anordnung der Schneidevorrichtung 8 in Vorschubrichtung der Sammelleiste 5 vor der Andrückrolle 1. Durch eine geeignete Steuerung von Vorschub der Sammelleiste 5 im Führungskanal 4, des Verfahrens der Andrückrolle 1 und des Betriebs der Schneidevorrichtung 9 kann erreicht werden, dass das Ende einer abgetrennten Sammelleiste 5 genau dann die Andrückstelle 10 unterhalb der Andrückrolle 1 erreicht, wenn sich dieser an der Stelle befindet, an der auch im fertigen Produkt die Sammelleiste 5 enden soll. Ein aufwändiges Abschneiden eines ansonsten überschüssigen Sammelleistenstückes oder ein nachträgliches Entfernen zu viel aufgelegten Sammelleistenmaterials ist nicht erforderlich. Insbesondere kann ein manueller Eingriff beim Verlegen der Sammelleiste 5 vollständig entfallen.

Die hier nicht dargestellte Steuervorrichtung kann die zu verlegende Sammelleiste 5 auch so vorschieben, dass der Beginn der Sammelleiste 5 präzise die Andrückstelle 10 erreicht hat, wenn sich die Andrückrolle 1 zum Start des Verlegeprozesses am gewünschten Startpunkt befindet.

Damit im Bedarfsfall auch kurze Sammelleisten 5 ohne Verschnitt verlegt werden können, kann die Schneidevorrichtung 8 so angeordnet werden, dass das Schneidmesser 9, oder ggf. ein alternatives Schneidmittel, mit einem möglichst geringen Abstand von der Andrückstelle 10 auf die Sammelleiste 5 wirkt, z.B. mit einem Abstand von maximal 60 mm, vorzugsweise maximal 50 mm oder weiter vorzugsweise maximal 40 mm. Hierfür ist die Schneidevorrichtung 8 möglichst nahe an das vordere Ende des Führungskanals 4 anzuordnen.

Um ein Verrutschen oder ein Abspringen der Sammelleiste 5 von der Andrückrolle 1 zu vermeiden, kann es vorteilhaft sein, die Sammelleiste 5 in einem Bereich zwischen der Andrückstelle 10 und dem Führungskanal 4 möglichst flach relativ zur Basisfolie 3 verlaufen zu lassen. Somit wird eine in Bezug auf die Andrückrolle 1 radial wirkende Kraft der Sammelleiste 5 und damit die Gefahr ihres Abspringens oder Abrutschens verringert. Vorzugsweise beträgt in einer Entfernung von 3 mm von der Andrückstelle 10 der senkrecht zur Basisfolie 3 gegebene Abstand der Sammelleiste 5 von der Basisfolie 3 höchstens 2 mm, vorzugsweise höchsten 1 mm.

Die Sammelleisten-Ablegeeinheit 26 weist vorzugsweise eine Linearführung 12, z.B. mit angetriebener Führungseinheit, z.B. als Schlitten, auf. Zusätzlich kann die Sammelleisten-Ablegeeinheit 26 einen Rotationsantrieb 13 aufweisen, welche vorzugsweise die Andrückrolle 13 trägt. Durch eine zusätzliche Relativbewegung der Folienauflage quer zur Linearführung kann ein dreiachsiger automatischer Bewegungsablauf der Andrückrolle 1 relativ zur Basisfolie 3 bzw. 30 realisiert werden. Ist die Folienauflage eine Wickeltrommel 34, kann die Relativbewegung z.B. durch eine feinregulierbare Drehung der Wickeltrommel 34 bewirkt werden.

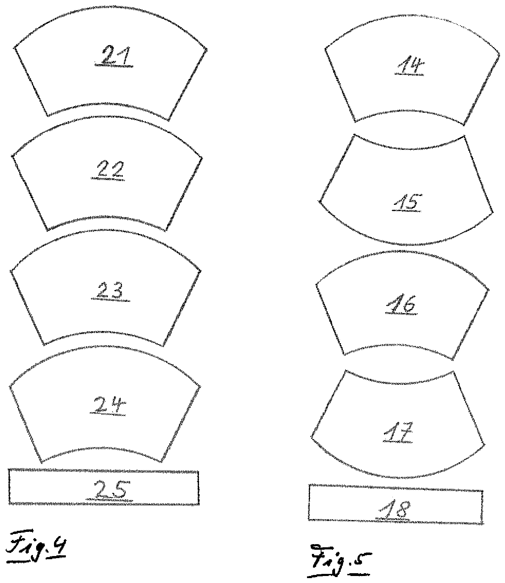

Fig. 2 zeigt im Querschnitt eine Wickeltrommel 34 mit vier aufgelegten Basisfolien 21 - 24 und einer Ausschussfolie 25. Der Bereich für die Ausschussfolie 25 ergibt sich aus dem Ablegeprozess für die in Fig. 2 nicht dargestellten Heizdrähte. Die Verteilung der Basisfolien 21-24 und der Ausschussfolie 25 ist in Fig. 4 wiedergegeben. Die Basisfolien 21-24 weisen jeweils eine z.B. für Windschutzscheiben typische Form auf. Andere Formen der Basisfolien 21-24 sind ebenfalls möglich. Die Verteilung der Basisfolien 21-24 ist gemäß Fig. 4 gleichsinnig, d.h. die längeren gekrümmten Seiten sind in Fig. 4 jeweils oben. In Fig. 2 sind vier separate Sammelleisten-Ablegeeinheiten 26-29 um den Umfang der Wickeltrommel 34 herum verteilt angeordnet, so dass sämtliche Basisfolien 21-24 gleichzeitig von den Sammelleisten-Ablegeeinheiten 26-29 bearbeitet werden können. Somit können gleichzeitig vier Sammelleisten 5 abgelegt werden, vorzugsweise mit völlig identischen Bewegungsmustern der Sammelleisten-Ablegeeinheiten 26-29. Hierfür kann ein viermal gleicher Umfangswinkel für die Installation der Sammelleisten-Ablegeeinheiten 26-29 vorgesehen werden, z.B. von viermal 84°, wenn der Umfangswinkel für den Bereich der Ausschussfolie 25 24° beträgt.

Fig. 3 und 5 zeigen eine alternative Anordnung von vier Basisfolien 14-17 auf dem Umfang der Wickeltrommel 34, nämlich gegensinnig, d.h. mit der längeren gekrümmten Seite in Fig. 5 abwechselnd oben und unten. Hier können zwei Sammelleisten-Ablegeeinheiten 19 und 20 so eingesetzt werden, dass gleichzeitig zwei Sammelleisten 5 abgelegt werden, vorzugsweise mit völlig identischen Bewegungsmustern der Sammelleisten-Ablegeeinheiten 19 und 20. Hierfür kann ein Umfangswinkel zwischen den Sammelleisten-Ablegeeinheiten 19 und 20 vorgesehen werden, der z.B. 168° beträgt, wenn der Umfangswinkel für den Bereich der Ausschussfolie 18 24° ist. Auf diese Weise können gleichzeitig z.B. die Basisfolien 14 und 16 und in einem darauf folgenden Durchgang gleichzeitig die Basisfolien 15 und 17 bearbeitet, d.h. mit Sammelleisten 5 versehen, werden.

Das im Folgenden für die Figuren 2 und 4 Dargestellte gilt in entsprechender Weise auch für die Variante gemäß den Fig. 3 und 5 sowie für weitere denkbare Varianten mit einer abweichenden Anzahl und abweichenden Formen von Basisfolien.

Die einzelnen Sammelleisten-Ablegeeinheiten 26-29 können an jedem Punkt des Umfangs der Wickeltrommel 34 installiert werden.

Eine feinregulierbare Drehung der Wickeltrommel 34 kann als gesteuerte Koordinatenachse für alle vier Sammelleisten-Ablegeeinheiten 26-29 gleichzeitig synchron eingesetzt werden.

Es versteht sich von selbst, dass anstelle aller oder einer Teilanzahl der Sammelleisten-Ablegeeinheiten 26-29 auch Varianten vorgesehen werden können, wie sie weiter oben für die einzelne Sammelleisten-Ablegeeinheit 69 zu Fig. 1 erwähnt sind, z.B. in Form von Sammelleisten-Doppelablegeeinheiten, bei denen zumindest jeweils Führungskanal und Andrückrolle in mindestens zweifacher Ausführung nebeneinander an einem gemeinsamen Rotationsantrieb vertikal über der Andrückstelle 10 installiert sind. Alternativ können für jede oder eine Teilanzahl der Basisfolien 21-24 zum Ablegen von unteren Sammelleisten 31 und oberen Sammelleisten 33 zwei vollständige und separate Sammelleisten-Ablegeeinheiten 26 vorgesehen werden.

Es kann auch vorgesehen werden, dass sämtliche Sammelleisten-Ablegeeinheiten 26-29 beweglich in Umfangsrichtung an einem hier nicht dargestellten Gestell der Wickeltrommel 34 auf ebenfalls nicht dargestellten Führungen angeordnet sind, wobei die Führungen eine Verstellbarkeit in Richtung des Wickeltrommelumfangs aufweisen können. Bei gängigen Wickeltrommeldurchmessern kann die Verstellbarkeit z.B. bis 800 mm betragen. Hierfür kann eine Feinverstellung, z.B. mit Klemmvorrichtung vorgesehen sein. Verstellbare Führungen erlauben es, innerhalb des zugehörigen Segments die Sammelleisten-Ablegeeinheiten 26-29 beliebig zu positionieren. So können im Fall von z.B. vier gleichmäßig verteilten Basisfolien 21-24 mit geringerer Folienausdehnung in Umfangsrichtung bei gleichbleibender Zwischenlücke zwischen den Folien als Grundstellung die vier Sammelleisten-Ablegeeinheiten 26-29 entsprechend näher zusammen oder weiter auseinander am Wickeltrommelumfang positioniert werden.

Weiterhin kann für die Sammelleisten-Ablegeeinheit 26 oder einer der Sammelleisten-Ablegeeinheiten 26-29 oder 19-20 eine hier nicht dargestellte mitlaufende vorzugsweise separat beheizte, separat gelagerte und vorzugsweise mechanisch separat abgefederte Druckrolle vorgesehen werden, welche in Achsrichtung neben der Andrückrolle 1 angeordnet ist, vorzugsweise mit geringem Abstand zur Andrückrolle 1. Die Druckrolle kann als Anrollvorrichtung dienen und läuft im Einsatz auf einer z.B. 5-10 mm breiten Laufspur auf einem schmalen Foliensteg zwischen dem Sammelleistenpaar und dem Folienende. Dabei können mittels einer dreiachsigen Bewegung der Sammelleisten-Ablegeeinheit 26 oder 26-29 oder 19-20 die Heizdrähte auf der Laufspur so stark auf der Basisfolie 3, bzw. 21-24 oder 14-17 verfestigen werden, dass die Heizdrähte auf oder dicht neben dieser Laufspur alle in einem nachfolgenden Schneidvorgang durchgetrennt werden können, ohne dass die Heizdrähte 32 sich dabei von der Basisfolie 3 ablösen. Diese Laufspur kann dicht neben dem verlegten Sammelleistenpaar verlaufen und sie kann gleichbleibenden Abstand zu diesem Sammelleistenpaar haben.

Es kann auch vorgesehen werden, an der Sammelleisten-Ablegeeinheit 26 oder an einer der Sammelleisten-Ablegeeinheiten 26-29 oder 19-20 eine hier nicht näher beschriebene weitere Abschneidevorrichtung, z.B. mit Rollmesser oder mit feststehendem Messer oder mit doppeltem Rollmesser mit z.B. 2mm Abstand und Aufbringung von elektrischer Spannung zwischen den beiden Messern zum Verbrennen der dazwischen liegenden Heizdrahtreste, anzubringen. Die weitere Abschneidevorrichtung kann mittels einer dreiachsigen Bewegung der Sammelleisten-Ablegeeinheit 26 oder einer der Sammelleisten-Ablegeeinheiten 26-29 oder 19-20 auf oder dicht neben der mit der oben beschriebenen Druckrolle verfestigten Laufspur alle Heizdrähte dieser Laufspur durchtrennen, ohne dabei die Basisfolie zu durchzuschneiden.

Es kann auch vorgesehen werden, zwischen allen Basisfolien 21-24 oder 14-17 (Abb.4 und 5) zusätzlich manuell oder mit einer nicht näher beschriebenen automatischen Folienabrollvorrichtung schmale Folienstreifen unter und über den Heizdrähten 32 zu installieren oder aufzukleben. Mit diesen Streifen und den dazwischenliegenden Heizdrähten 32 können nach dem zuvor beschriebenen Durchtrennen aller Heizdrähte 32, durch manuelles Abziehen dieses Folienstreifens mit den darin eingeklebten Drähten, alle Drähte bis zur Schnittlinie schnell entfernt werden.

Es kann auch vorgesehen werden, dass die vorgenannte Anrollvorrichtung und/oder die vorgenannte weitere Abschneidevorrichtung und/oder die vorgenannte Folienabrollvorrichtung separate, parallel zur Trommelachse angeordnete Führungen aufweisen. Auf diese Weise können sie separat in den Gesamtzyklus integriert werden.

Schließlich kann vorgesehen werden, dass mit einer elektrischen oder elektronischen Steuerungsanlage alle beschriebenen Prozessschritte als Automatikprogramm ablaufen können.

**Bezugszeichenliste:**

| | | | |
|---|---|---|---|
| 1 | Andrückrolle | 23 | Basisfolie |
| 2 | Vorschubeinrichtung | 24 | Basisfolie |
| 3 | Basisfolie | 25 | Ausschussfolie |
| 4 | Führungskanal | 26 | Sammelleisten-Ablegeeinheit |
| 5 | Sammelleiste | 27 | Sammelleisten-Ablegeeinheit |
| 6 | Vorratsrolle | 28 | Sammelleisten-Ablegeeinheit |
| 7 | Vorschubrolle | 29 | Sammelleisten-Ablegeeinheit |
| 8 | Schneidevorrichtung | 30 | Basisfolie |
| 9 | Schneidmesser | 31 | Untere Sammelleiste |
| 10 | Andrückstelle | 32 | Heizdrähte |
| 11 | Schneidschlitz | 33 | Obere Sammelleiste |
| 12 | Linearführung | 34 | Wickeltrommel |
| 13 | Rotationsantrieb | 35 | Führungseinrichtung |
| 14 | Basisfolie | | |
| 15 | Basisfolie | | |
| 16 | Basisfolie | | |
| 17 | Basisfolie | | |
| 18 | Ausschussfolie | | |
| 19 | Sammelleisten-Ablegeeinheit | | |
| 20 | Sammelleisten-Ablegeeinheit | | |
| 21 | Basisfolie | | |
| 22 | Basisfolie | | |

## Patentansprüche

1. Verfahren zum Verlegen von Sammelleisten (5, 31, 33) in Folien, bei dem eine Schar von Heizdrähten (32) und mindestens zwei jeweils mindestens eine Teilanzahl der Heizdrähte (32) elektrisch kontaktierende Sammelleisten (5, 31, 33) auf mindestens eine Basisfolie (3, 14-17, 21-24, 30) aufgebracht werden, wobei die Sammelleisten (5, 31, 33) mittels einer Führungseinrichtung (35) geführt und mittels einer Andrückrolle (1) in Richtung auf die Basisfolie (3, 14-17, 21-24, 30) gepresst werden,
**dadurch gekennzeichnet, dass**
die Sammelleisten (5, 31, 33) mittels der Führungseinrichtung (35) jeweils in Richtung auf die Andrückrolle (1) geführt und jeweils in Führungsrichtung vor der Andrückrolle (1) mittels einer Schneidevorrichtung (8) geschnitten werden.

2. Verfahren nach Anspruch 1, **dadurch gekennzeichnet, dass** die Sammelleisten (5, 31, 33) vor dem Ende der Führungseinrichtung (35) geschnitten werden.

3. Verfahren nach Anspruch 1 oder 2, **dadurch gekennzeichnet, dass** die jeweilige Sammelleiste (5, 31, 33) relativ zur Folie derart flach zwischen einer durch das Anpressen der Sammelleiste (5, 31, 33) mittels der Andrückrolle (1) auf der Basisfolie (3, 14-17, 21-24, 30) definierten Andrückstelle (10) und der Führungseinrichtung (35) verläuft, dass in einer Entfernung von 3 mm der senkrecht zur Folie gegebene Abstand der Sammelleiste (5, 31, 33) von der Folie höchstens 2 mm, vorzugsweise höchsten 1 mm beträgt.

4. Verfahren nach einem der vorhergehenden Ansprüche, **dadurch gekennzeichnet, dass** die Andrückrolle (1) beheizt wird.

5. Verfahren nach einem der vorhergehenden Ansprüche, **dadurch gekennzeichnet, dass** die Sammelleisten (5, 31, 33) auf die Basisfolie (3, 14-17, 21-24, 30) geklebt werden und der Klebeprozess mittels von der Andrückrolle (1) eingebrachter Wärme bewirkt oder unterstützt wird.

6. Verfahren nach einem der vorhergehenden Ansprüche, **dadurch gekennzeichnet, dass** die Sammelleisten (5, 31, 33) mit den Heizdrähten (32) oder einer Teilanzahl der Heizdrähte (32) verlötet werden und der Lötprozess mittels von der Andrückrolle (1) eingebrachter Wärme bewirkt oder unterstützt wird.

7. Verfahren nach Anspruch 6, **dadurch gekennzeichnet, dass** zum Verlegen der Sammelleisten (5, 31, 33) und dem Verlöten der Heizdrähte (32) die Andrückrolle (1) mit unterschiedlichen Temperaturen betrieben wird.

8. Verfahren nach einem der vorhergehenden Ansprüche, **dadurch gekennzeichnet, dass** bei einer Mehrzahl von auf einem Umfang einer Wickeltrommel (34) verteilter Basisfolien (3, 14-17, 21-24, 30) gleichzeitig Sammelleisten (5, 31, 33) auf mindestens zweien der Basisfolien (3, 14-17, 21-24, 30) aufgebracht werden.

9. Vorrichtung zum Verlegen von Sammelleisten in Folien, umfassend mindestens eine Sammelleisten-Ablegeeinheit (19, 20, 26-29) mit einer Führungseinrichtung (35) zur Zuführung einer Sammelleiste (5, 31, 33) und eine die Sammelleiste (5, 31, 33) in Richtung auf eine Basisfolie (3, 14-17, 21-24, 30) pressende Andrückrolle (1) **dadurch gekennzeichnet, dass** die Führungseinrichtung (35) zur Zuführung der Sammelleiste (5, 31, 33) in Richtung auf die Andrückrolle (1) eingerichtet ist und eine Schneidevorrichtung (8) zum Schneiden der Sammelleiste (5, 31, 33) vorhanden ist, wobei die Schneidevorrichtung (8) derart angeordnet und eingerichtet ist, dass die Sammelleiste (5, 31, 33) in Zuführrichtung vor der Andrückrolle (1) geschnitten wird.

10. Vorrichtung nach Anspruch 9, **gekennzeichnet durch** eine Steuereinrichtung, welche eingerichtet ist, für die Sammelleisten-Ablegeeinheit (19, 20, 26-29) oder mindestens eine der Sammelleisten-Ablegeeinheiten (19, 20, 26-29) einen Vortrieb für die Sammelleiste (5, 31, 33) und den Betrieb der Schneidevorrichtung (8) derart zu steuern, dass die abgelegte Sammelleiste (5, 31, 33) ohne weitere Kürzung eine für ein fertiges Produkt gewünschte Endlänge aufweist.

11. Vorrichtung nach Anspruch 9 oder 10, **dadurch gekennzeichnet, dass** an der Sammelleisten-Ablegeeinheit (19, 20, 26-29) oder an mindestens eine der Sammelleisten-Ablegeeinheiten (19, 20, 26-29) die Andrückrolle (1) beheizt ist.

12. Vorrichtung nach einem der Ansprüche 9 bis 10 mit einer Mehrzahl von Sammelleisten-Ablegeeinheiten (19, 20, 26-29), **dadurch gekennzeichnet, dass** die Sammelleisten-Ablegeeinheiten (19, 20, 26-29) getrennte Führungen (12) aufweisen.

13. Vorrichtung nach Anspruch 12, **gekennzeichnet durch** eine Steuerung, mit der zumindest zwei der Sammelleisten-Ablegeeinheiten (19, 20, 26-29), vorzugsweise sämtliche Sammelleisten-Ablegeeinheiten (19, 20, 26-29), gleichzeitig zum Ablegen jeweils einer der Sammelleisten (5, 31,33) gesteuert werden.

14. Vorrichtung nach Anspruch 12 oder 13, **gekennzeichnet durch** eine Wickeltrommel (34) zur Aufnahme der Basisfolie (3, 14-17, 21-24, 30) oder einer Mehrzahl von Basisfolien (3, 14-17, 21-24, 30), wobei die Sammelleisten-Ablegeeinheiten (19, 20, 26-29) auf dem Umfang der Wickeltrommel (34) verteilt angeordnet sind.

15. Vorrichtung nach einem der Ansprüche 9 bis 14, **dadurch gekennzeichnet, dass** der Abstand zwischen einer Schnittstelle der Schneidevorrichtung (8) von einer durch das Anpressen der Sammelleiste (5, 31, 33) mittels der Andrückrolle (1) definierten Andrückstelle (10) höchstens 50 mm, vorzugsweise höchstens 40 mm, beträgt.

16. Vorrichtung nach einem der Ansprüche 9 bis 15, **dadurch gekennzeichnet, dass** die Führungseinrichtung (35) einen in seiner Breite verstellbaren Führungskanal (4) aufweist.

17. Vorrichtung nach einem der Ansprüche 9 bis 15, **dadurch gekennzeichnet, dass** die Führungseinrichtung (35) eine Vorschubeinheit mit mindestens einer angetriebenen, auf eine obere Breitseite der jeweiligen Sammelleiste (5) wirkenden Vorschubrolle (7) aufweist.

18. Vorrichtung nach Anspruch 17, **dadurch gekennzeichnet, dass** die Führungseinrichtung (35) eine der angetriebenen Vorschubrolle (7) gegenüberliegende, auf eine untere Breitseite der Sammelleiste (5) wirkende, vorzugsweise nicht angetriebene Gegenrolle aufweist.

## Claims

1. A method for laying busbars (5, 31, 33) in films, in which a bundle of heating wires (32) and at least two busbars (5, 31, 33), each electrically contacting at least one subset of the heating wires (32), are applied to at least one base film (3, 14-17, 21-24, 30), wherein the busbars (5, 31, 33) are each guided by means of a guide unit (35) and are pressed by means of the pressure roller (1) in the direction of the base film (3, 14-17, 21-24, 30),
**characterized in that**
the busbars (5, 31, 33) are each guided by means of the guide unit (35) in the direction of a pressure roller (1) and seen in the guide direction are each cut before the pressure roller (1) by means of a cutting device (8).

2. The method as claimed in claim 1, **characterized in that** the busbars (5, 31, 33) are cut before the end of the guide unit (35).

3. The method as claimed in claim 1 or 2,
**characterized in that** the respective busbar (5, 31, 33) extends flatly in relation to the film between a pressure point (10) defined by the pressing of the busbar (5, 31, 33) by means of the pressure roller (1) on the base film (3, 14-17, 21-24, 30) and the guide unit (35) in such a way that at a distance of 3 mm, the distance of the busbar (5, 31, 33) from the film perpendicular to the film is at most 2 mm, preferably at most 1 mm.

4. The method as claimed in any one of the preceding claims, **characterized in that** the pressure roller (1) is heated.

5. The method as claimed in any one of the preceding claims, **characterized in that** the busbars (5, 31, 33) are adhesively bonded on the base film (3, 14-17, 21-24, 30) and the adhesive bonding process is effectuated or assisted by means of heat introduced by the pressure roller (1).

6. The method as claimed in any one of the preceding claims, **characterized in that** the busbars (5, 31, 33) are soldered with the heating wires (32) or a subset of the heating wires (32) and the soldering process is effectuated or assisted by means of heat introduced by the pressure roller (1).

7. The method as claimed in claim 6, **characterized in that** the pressure roller (1) is operated at different temperatures for laying the busbars (5, 31, 33) and for soldering the heating wires (32).

8. The method as claimed in any one of the preceding claims, **characterized in that**, in the case of a plurality of base films (3, 14-17, 21-24, 30) distributed on a circumference of a winding drum (34), busbars (5, 31, 33) are applied simultaneously to at least two of the base films (3, 14-17, 21-24, 30).

9. A device for laying busbars in films, comprising at least one busbar laying unit (19, 20, 26-29) having a guide unit (35) for supplying a busbar (5, 31, 33) and a pressure roller (1) pressing the busbar (5, 31, 33) in the direction towards a base film (3, 14-17, 21-24, 30), **characterized in that** guide unit (35) is configured for supplying the busbar (5, 31, 33) in the direction towards the pressure roller (1) and that a cutting device (8) for cutting the busbar (5, 31, 33)is provided, wherein the cutting device (8) is arranged and configured in such a way that seen in the feed direction the busbar (5, 31, 33) is cut before the pressure roller (1).

10. The device as claimed in claim 9, **characterized by** a control unit, which is configured, for the busbar laying unit (19, 20, 26-29) or at least one of the busbar laying units (19, 20, 26-29), to control a feed for the busbar (5, 31, 33) and the operation of the cutting device (8) in such a way that the laid busbar (5, 31, 33) has a final length desired for a finished product without further trimming.

11. The device as claimed in claim 9 or 10, **characterized in that** the pressure roller (1) is heated on the busbar laying unit (19, 20, 26-29) or on at least one of the busbar laying units (19, 20, 26-29).

12. The device as claimed in any one of claims 9 to 10 having a plurality of busbar laying units (19, 20, 26-29), **characterized in that** the busbar laying units (19, 20, 26-29) have separate guides (12).

13. The device as claimed in claim 12, **characterized by** a controller, using which at least two of the busbar laying units (19, 20, 26-29), preferably all busbar laying units (19, 20, 26-29), are controlled simultaneously for laying one of the busbars (5, 31, 33) each.

14. The device as claimed in claim 12 or 13, **characterized by** a winding drum (34) for accommodating the base film (3, 14-17, 21-24, 30) or a plurality of base films (3, 14-17, 21-24, 30), wherein the busbar laying units (19, 20, 26-29) are arranged distributed on the circumference of the winding drum (34).

15. The device as claimed in any one of claims 9 to 14, **characterized in that** the distance between a cutting point of the cutting device (8) and a pressure point (10) defined by the pressing on of the busbar (5, 31, 33) by means of the pressure roller (1) is at most 50 mm, preferably at most 40 mm.

16. The device as claimed in any one of claims 9 to 15, **characterized in that** the guide unit (35) has a guide channel (4) adjustable in its width.

17. The device as claimed in any one of claims 9 to 15, **characterized in that** the guide unit (35) has a feed unit having at least one driven feed roller (7) acting on an upper wide side of the respective busbar (5).

18. The device as claimed in claim 17, **characterized in that** the guide unit (35) has a counter roller, which is opposite to the driven feed roller (7), acts on a lower wide side of the busbar (5), and is preferably not driven.

## Revendications

1. Procédé de pose de baguettes collectrices (5, 31, 33) dans des films, avec lequel un assemblage de fils chauffants (32) et au moins deux baguettes collectrices (5, 31, 33), qui entrent respectivement en contact électrique avec au moins un nombre partiel des fils chauffants (32), sont appliqués sur au moins un film de base (3, 14-17, 21-24, 30), les baguettes collectrices (5, 31, 33) étant guidées au moyen d'un dispositif de guidage (35) et étant pressées au moyen d'un rouleau presseur (1) en direction du film de base (3, 14-17, 21-24, 30),
**caractérisé en ce que**
les baguettes collectrices (5, 31, 33) sont guidées au moyen du dispositif de guidage (35) respectivement en direction du rouleau presseur (1) et sont dans la direction de guidage en amont du rouleau presseur (1) respectivement découpées au moyen d'un arrangement de coupe (8).

2. Procédé selon la revendication 1, **caractérisé en ce que** les baguettes collectrices (5, 31, 33) sont découpées avant la fin du dispositif de guidage (35).

3. Procédé selon la revendication 1 ou 2, **caractérisé en ce que** la baguette collectrice (5, 31, 33) respective suit à plat un tracé par rapport au film entre un point de pressage (10), défini par le pressage de la baguette collectrice (5, 31, 33) au moyen du rouleau presseur (1) sur le film de base (3, 14-17, 21-24, 30), et le dispositif de guidage (35) de telle sorte qu'à une distance de 3 mm, l'écart entre la baguette collectrice (5, 31, 33) et le film indiqué perpendiculairement au film est au maximum de 2 mm, de préférence au maximum de 1 mm.

4. Procédé selon l'une des revendications précédentes, **caractérisé en ce que** le rouleau presseur (1) est chauffé.

5. Procédé selon l'une des revendications précédentes, **caractérisé en ce que** les baguettes collectrices (5, 31, 33) sont collées sur le film de base (3, 14-17, 21-24, 30) et le processus de collage est produit ou assisté au moyen de la chaleur introduite par le rouleau presseur (1).

6. Procédé selon l'une des revendications précédentes, **caractérisé en ce que** les baguettes collectrices (5, 31, 33) sont brasées avec les fils chauffants (32) ou un nombre partiel des fils chauffants (32) et le processus de brasage est produit ou assisté au moyen de la chaleur introduite par le rouleau presseur (1).

7. Procédé selon la revendication 6, **caractérisé en ce que** le rouleau presseur (1) fonctionne avec des températures différentes pour la pose des baguettes collectrices (5, 31, 33) et pour le brasage des fils chauffants (32).

8. Procédé selon l'une des revendications précédentes, **caractérisé en ce qu'**en présence d'une pluralité de films de base (3, 14-17, 21-24, 30) distribués sur un pourtour d'un cylindre enrouleur (34), des baguettes collectrices (5, 31, 33) sont appliquées simultanément sur au moins deux des films de base (3, 14-17, 21-24, 30).

9. Arrangement pour poser de baguettes collectrices dans des films, comprenant au moins une unité de dépose de baguettes collectrices (19, 20, 26-29) pourvue d'un dispositif de guidage (35) destiné à acheminer une baguette collectrice (5, 31, 33) et d'un rouleau presseur (1) qui presse la baguette collectrice (5, 31, 33) en direction d'un film de base (3, 14-17, 21-24, 30), **caractérisé en ce que** le dispositif de guidage (35) est conçu pour acheminer la baguette collectrice (5, 31, 33) en direction du rouleau presseur (1) et un arrangement de coupe (8) est présent pour découper la baguette collectrice (5, 31, 33), l'arrangement de coupe (8) étant disposé et conçu de telle sorte que la baguette collectrice (5, 31, 33) est découpée dans la direction de l'acheminement en amont du rouleau presseur (1).

10. Arrangement selon la revendication 9, **caractérisé par** un dispositif de commande, qui est conçu pour commander un avancement pour la baguette collectrice (5, 31, 33) et le fonctionnement de l'arrangement de coupe (8) pour l'unité de dépose de baguettes collectrices (19, 20, 26-29) ou au moins l'une des unités de dépose de baguettes collectrices (19, 20, 26-29) de telle sorte que la baguette collectrice (5, 31, 33) déposée présente, sans raccourcissement supplémentaire, une longueur finale souhaitée pour un produit fini.

11. Arrangement selon la revendication 9 ou 10, **caractérisé en ce que** le rouleau presseur (1) est chauffé au niveau de l'unité de dépose de baguettes collectrices (19, 20, 26-29) ou au niveau d'au moins l'une des unités de dépose de baguettes collectrices (19, 20, 26-29).

12. Arrangement selon la revendication 9 ou 10 comprenant une pluralité d'unités de dépose de baguettes collectrices (19, 20, 26-29), **caractérisé en ce que** les unités de dépose de baguettes collectrices (19, 20, 26-29) possèdent des guides (12) séparés.

13. Arrangement selon la revendication 12, **caractérisé par** une commande avec laquelle au moins deux des unités de dépose de baguettes collectrices (19, 20, 26-29), de préférence toutes les unités de dépose de baguettes collectrices (19, 20, 26-29) sont commandées simultanément pour déposer respectivement l'une des baguettes collectrices (5, 31, 33).

14. Arrangement selon la revendication 12 ou 13, **caractérisé par** un cylindre enrouleur (34) destiné à recevoir le film de base (3, 14-17, 21-24, 30) ou une pluralité de films de base (3, 14-17, 21-24, 30), les unités de dépose de baguettes collectrices (19, 20, 26-29) étant disposées distribuées sur le pourtour du cylindre enrouleur (34).

15. Arrangement selon l'une des revendications 9 à 14, **caractérisé en ce que** l'écart entre un point de coupe de l'arrangement de coupe (8) et un point de pressage (10) défini par le pressage de la baguette collectrice (5, 31, 33) au moyen du rouleau presseur (1) est au maximum égal à 50 mm, de préférence au maximum égal à 40 mm.

16. Arrangement selon l'une des revendications 9 à 15, **caractérisé en ce que** le dispositif de guidage (35) possède un canal de guidage (4) de largeur variable.

17. Arrangement selon l'une des revendications 9 à 15, **caractérisé en ce que** le dispositif de guidage (35) possède une unité d'avance comprenant au moins un rouleau d'avance (7) entraîné qui agit sur un côté large supérieur de la baguette collectrice (5) respective.

18. Arrangement selon la revendication 17, **caractérisé en ce que** le dispositif de guidage (35) possède un contre-rouleau, de préférence non entraîné, qui se trouve à l'opposé du rouleau d'avance (7) entraîné et agit sur un côté large inférieur de la baguette collectrice (5).
